# EUROPÄISCHE PATENTSCHRIFT

(11) **EP 2 308 719 B1**
(45) Veröffentlichungstag und Bekanntmachung des Hinweises auf die Patenterteilung: **26.02.2014**
(21) Anmeldenummer: 10164713.9
(22) Anmeldetag: 02.06.2010
(51) Int. Cl.: B60P 7/13, B65D 90/00

(54) **Verriegelungsvorrichtung**
Locking device
Dispositif de verrouillage

(30) Priorität: 09.10.2009 DE 102009044222
(43) Veröffentlichungstag der Anmeldung: 13.04.2011
(73) Patentinhaber: WIHAG Fahrzeugbausysteme GmbH, 33602 Bielefeld (DE)
(72) Erfinder: Nebelung, Christian, 32602 Vlotho (DE)
(74) Vertreter: Dantz, Jan Henning

(56) Entgegenhaltungen:
- EP-A2- 1 243 466
- DE-A1- 3 642 399
- DE-A1-102007 007 067
- DE-U1-202008 008 417

## Beschreibung

Die Erfindung betrifft eine Verriegelungsvorrichtung zum Festsetzen eines Containers auf den Fahrzeugrahmen eines Nutzfahrzeuges, die einen in vertikaler Richtung verfahrbaren, sowie während dieser Bewegung um seine Mittellängsachse um einen Winkel von ca. 90° drehbaren, aus einem Schaft und einem pilzförmigen Spannkopf bestehenden Spannbolzen aufweist, dass der Schaft des Spannbolzens mit mindestens einem radial abragenden Führungsbolzen versehen ist, der in jeweils eine Steuerkurve einer ortsfesten Steuerhülse eingreift, und dass die Bauteile der Verriegelungsvorrichtung in einem kastenartigen Gehäuse installiert sind.

Container sind in der Transport- und Lagertechnik allgemein bekannt. Zur Sicherung des vom Fahrzeug aufgenommenen Containers sind die Verriegelungsvorrichtungen notwendig. Üblicherweise sind die Container mit Eckbeschlägen versehen, die an der unteren Seite mit Öffnungen versehen sind, durch die der pilzförmige Kopf bzw. der hammerförmige Kopf hindurchgeführt werden kann. Durch die spezielle Gestaltung des Kopfes des Spannbolzens wird er während der Aufnahme durch das Gewicht des Containers um einen Winkel von ca. 90° gedreht, so dass der Container gegen eine Verschiebung auf dem Fahrzeugrahmen gesichert ist.

Es ist allgemein bekannt, dass die Fahrer von Nutzfahrzeugen stets unter Zeitdruck stehen. Die Verriegelungen müssen so ausgelegt sein, dass die Verriegelung und die Entriegelung des aufgenommenen Containers vor dem Absetzen eines Containers sinngemäß selbsttätig erfolgt.

Bei einer bekannten Verriegelungsvorrichtung ist der Eckbeschlag mit einem bolzenförmigen Nocken versehen, der beim Absenken des Containers auf ein Übertragungsgestänge wirkt. Der Spannbolzen ist mit einander diametral gegenüberliegenden Zapfen versehen, die in Steuerkurven geführt sind, um die Drehbewegung des Spannbolzens abzuleiten. Dieses Übertragungsgestänge besteht aus mehreren Hebeln, die teilweise federbelastet sind. Dies kann im Betrieb zu Beschädigungen von Hebeln führen und außerdem ist die Funktion der Verriegelungsvorrichtung nicht sichergestellt, wenn die Hebel verbogen oder beschädigt sind. Derartige Verriegelungsvorrichtungen sind auch konstruktiv aufwendig.

Aus der DE 20 2008 008 417 U1 ist eine Verriegelung zum Verriegeln eines Containers bekannt, bei der die Bauteile der Verriegelung in einem kastenartigen Gehäuse installiert sind, welches nach unten offen ist, wobei jedoch eine schließend ausgebildete Platte den Boden ersetzt, die an einer verfahrbaren Hülse fest angesetzt ist. In diese Hülse greift der Schaft eines Verriegelungsbolzens ein. Die Platte ist federbelastet und weist an der dem Verriegelungskopf abgewandten Seite einen Fortsatz auf, der im verriegelten Zustand auf einem Widerlager aufliegt. Die Drehung des Schaftes erfolgt durch einen Führungsschlitz, der in der Hülse angeordnet ist, und in den ein Führungsstift eingreift. Zum Absenken wird das Widerlager außer Kontakt mit dem Fortsatz gebracht. Durch die dann mögliche Absenkbewegung der Hülse wird der Schaft um 90° gedreht, so dass er in die verriegelnde Stellung gebracht wird. Der Schaft kann zum Entriegeln durch Verfahren der Hülse in Richtung zum Verriegelungskopf gebracht werden. Sowohl in der verriegelten als auch in der entriegelten Stellung steht der Verriegelungskopf auf gleicher Höhe und die Verfahrbarkeit der Hülse wird beim Absenken durch die federbelastete Platte in Verbindung mit dem Führungsschlitz der Hülse abgeleitet.

In der DE 10 2007 007 067 A1 wird eine Verriegelungsvorrichtung für einen Container beschrieben, bei der der Verriegelungskopf durch ein damit zusammenwirkendes Gestänge bewegt wird. Dieses Gestänge besteht aus Hebeln, einem Federhebel und einer Federzunge. Der Federhebel ist federbelastet. Die aus dem Gestänge gebildete Betätigungseinrichtung liegt seitlich neben einer Führungshülse für den Spannbolzen.

Der Erfindung liegt die Aufgabe zugrunde, eine Verriegelungsvorrichtung der eingangs näher beschriebenen Art so zu gestalten, dass die Bauteile der Verriegelungsvorrichtung geschützt sind, und dass die Anzahl der Bauteile minimiert ist.

Die gestellte Aufgabe wird dadurch gelöst, dass das Gehäuse an der dem Spannkopf des Spannbolzens zugewandten Seite offen ist, dass in dem Gehäuse ein Druckelement in Längsrichtung des Spannbolzens verschiebbar derart geführt ist, dass durch den aufsetzbaren Container der Spannbolzen in die Verriegelungsstellung verdrehbar ist, und dass an der oberen Seite des Druckelementes Druckklötze angesetzt oder angeformt sind.

Das Gehäuse hat nunmehr nicht nur eine Schutzfunktion für die Bauteile der Verriegelungsvorrichtung, sondern dient auch gleichzeitig der Führung des Druckelementes, von dessen Bewegung in Längsrichtung des Spannbolzens die Drehbewegung dieses Spannbolzens ableitbar ist. Dadurch wird außerdem die Anzahl der Bauteile minimiert.

Von dem Druckelement wird die Drehbewegung des Spannbolzens zwar abgeleitet, jedoch ist in weiterer Ausgestaltung vorgesehen, dass der Schaft des Spannbolzens innerhalb eines ringförmigen Lagerflansches angeordnet ist, und mit diesem fest verbunden ist. Dadurch wird der Spannbolzen exakt geführt, da der Außendurchmesser des Lagerflansches größer ist als der Außendurchmesser des Schaftes des Spannbolzens. Außerdem besteht der Vorteil, dass das Druckelement an die Form des Eckbeschlages des Containers angepasst werden kann. Dieses Druckelement könnte auch als Adapter bezeichnet werden.

In besonders vorteilhafter Weise ist vorgesehen, dass der Abstand des Lagerflansches zur zugewandten Fläche des Spannkopfes des Spannbolzens, bezogen auf den verriegelten Zustand des Spannbolzens, kleiner ist als der Abstand zur gegen-überliegenden unteren Fläche des Spannbolzens. Bei dieser Ausführung ist es dann in besonders vorteilhafter Weise möglich, dass die Steuerkurve bzw. die Steuerkurven sich über den Bereich der Steuerhülse erstreckt, der zwischen dem Lagerflansch und der unteren Fläche der Steuerhülse vorgesehen sind. Dabei ist dann vorgesehen, dass jede Steuerkurve als spiralförmige Nut ausgebildet ist, in die der Führungsbolzen bzw. die Führungsbolzen eingreifen. Für eine gleichmäßige Kräfteverteilung ist vorgesehen, dass die Steuerhülse mit zwei einander gegenüberliegenden Steuerkurven versehen ist. Da das zur Drehung des Spannbolzens notwendige Drehmoment dann an zwei einander gegenüberliegenden Seiten vorgesehen ist, kann ein Verkanten des Spannbolzens bei der Drehbewegung ausgeschlossen werden. In einfachster Weise kann jeder Führungsbolzen als Zylinderkopfschraube ausgebildet sein. Der Schaft jeder Zylinderkopfschraube kann dann in eine Gewindebohrung des Spannbolzens eingedreht werden, wobei der zylindrische Kopf eine optimale Führung innerhalb jeder Steuerkurve bildet.

In einer konstruktiv günstigen Ausbildung ist vorgesehen, dass das Druckelement aus einem nach Art eines U-förmigen Profilabschnittes ausgebildeten Führungsteil besteht, dessen parallele und nach innen gerichtete Schenkel an den Innenflächen der parallel zueinander stehenden Wandung des Gehäuses anliegen.

Damit die Steuerhülse gegen Verdrehung gesichert ist, ist vorgesehen, dass in dem dem Spannkopf abgewandten Bereich der Steuerhülse ein Rastbolzen an- oder eingesetzt ist. Dieser Rastbolzen ist mit einem gegenüber der zugeordneten Gehäusewandung vorstehenden Kopf versehen, damit er von außen betätigbar ist.

Anhand der beiliegenden Zeichnung wird die Erfindung noch näher erläutert.

Es zeigt:
- Figur: 1 eine erfindungsgemäße Verriegelungsvorrichtung in perspektivischer Darstellung im verriegelten Zustand des Containers
- Figur 2: die erfindungsgemäße Verriegelungsvorrichtung in perspektivischer Darstellung im entriegelten Zustand des Containers in Vollansicht
- Figur 3: die erfindungsgemäße Verriegelungsvorrichtung in perspektivischer Darstellung im verriegelten Zustand des Containers in Vollansicht.

Aus Gründen der vereinfachten Darstellung ist der Eckbeschlag nicht dargestellt. Die Bauteile der erfindungsgemäßen Verriegelungsvorrichtung 1 sind in einem kastenartigen Gehäuse 2 installiert. Die Verriegelungsvorrichtung 1 besteht im Wesentlichen aus einem Spannbolzen 3, einem Druckelement 4, einem Lagerflansch 5, einer Steuerhülse 6, einem Rastbolzen 7 und im dargestellten Ausführungsbeispiel aus zwei einander diametral gegenüberliegenden Führungsbolzen 8, 9.

Der Spannbolzen 3 besteht aus einem pilzförmigen Spannkopf 10 und einem Schaft 11. Der Schaft 11 ist in einer Bohrung des ringförmigen Lagerflansches 5 geführt. Die Steuerhülse 6 ist mit zwei gegenüberliegenden spiralförmigen Steuerkurven 12, 13 versehen, die im dargestellten Ausführungsbeispiel als Nuten ausgebildet sind.

Der Lagerflansch 5 ist mit dem Spannbolzen 3 fest verbunden, beispielsweise durch eine Stiftverbindung.

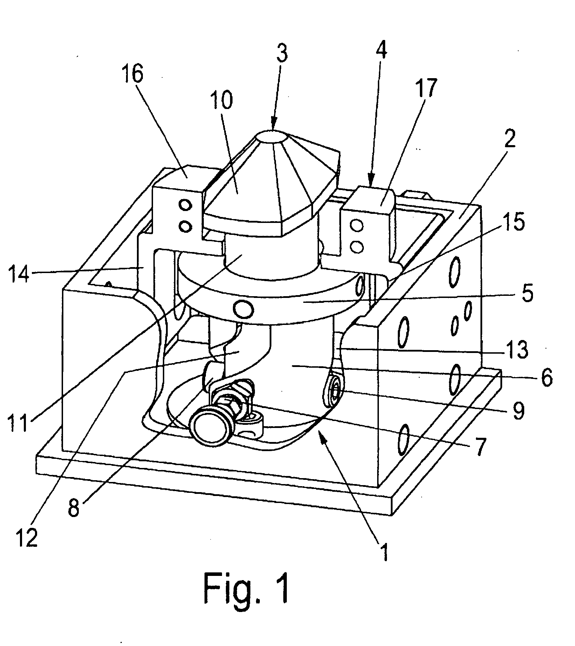

Wie die Figur 1 zeigt, besteht das Druckelement aus einem nach Art eines U-Profilabschnittes ausgebildeten Führungsteil, dessen parallele Schenkel 14, 15 an den Innenflächen der parallel zueinander stehenden Wandungen anliegen. Diese Schenkel sind nach innen gerichtet, d.h., zum Gehäuseboden. An den oberen Flächen sind zwei Druckklötze 16, 17 angesetzt oder angeformt, auf die der Container-Eckbeschlag wirkt.

Es ergibt sich aus der Figur 1, dass das Druckelement 4 von einer nicht dargestellten, ausgefahrenen Stellung abgesenkt wird, sobald ein Container damit in Kontakt kommt. Das Druckelement 4 nimmt den Lagerflansch 5 und somit auch den Spannbolzen 3 mit. Durch die in die Steuerkurven 12, 13 eingreifenden Führungsbolzen 8, 9 erfolgt eine entsprechende Drehung des Spannbolzens 3. Die Rückführung des Spannbolzens 3 in die Freigabestellung erfolgt in umgekehrter Reihenfolge.

In der Figur 1 ist die Verriegelungsvorrichtung 1 im aufgebrochenen Zustand dargestellt, um die Steuerhülse 6 mit den Steuerkurven 12, 13 und die Führungsbolzen 8, 9 sichtbar darzustellen.

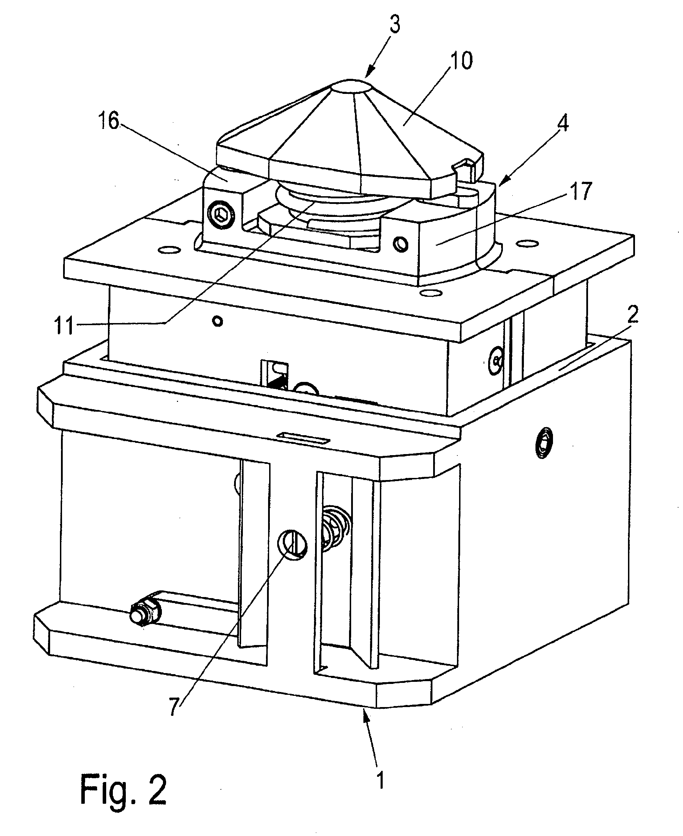

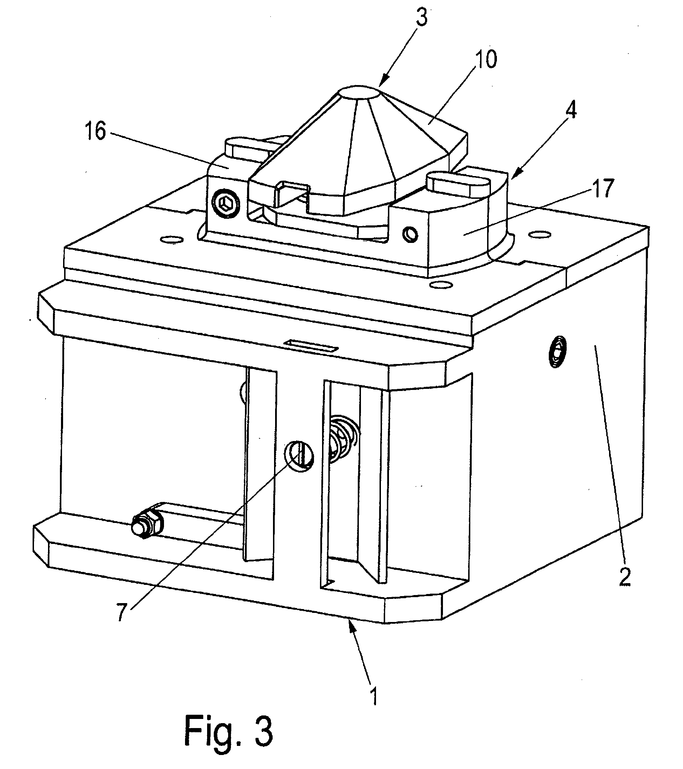

In den Figuren 2 und 3 ist die Verriegelungsvorrichtung 1 in jeweils einer Vollansicht dargestellt. Ein Vergleich der Figur 3 mit der Figur 2 zeigt, dass bei einer Belastung durch einen aufgesetzten Container das gesamte Druckelement 4 und der Spannbolzen 3 abgesenkt werden. Durch die Steuerkurven 12, 13 in Verbindung mit den Führungsbolzen 8, 9 wird der Spannbolzen 3 um 90° in die verriegelte Stellung gemäß der Figur 3 gedreht.

Die Entriegelung nach dem Anheben eines Containers erfolgt durch die Betätigung des Rastbolzens 7, der federbelastet ist.

Die Erfindung ist nicht auf das dargestellte Ausführungsbeispiel beschränkt. Wesentlich ist, dass die die Verriegelungsvorrichtung 1 bildenden Bauteile in einem kastenartigen Gehäuse 2 montiert sind, welches an der dem Spannkopf 10 des Spannbolzens 3 zugeordneten Seite offen ist und dass der Spannbolzen 3 in einer Steuerhülse 6 geführt ist, welches mit Steuerkurven 12, 13 in Form von spiralförmigen Nuten versehen ist, in die Führungsbolzen 8, 9 eingreifen, die in den Schaft 11 des Spannbolzens 3 eingesetzt sind.

## Patentansprüche

1. Verriegelungsvorrichtung (1) zum Festsetzen eines Containers auf den Fahrzeugrahmen eines Nutzfahrzeuges, die einen in vertikaler Richtung verfahrbaren, sowie während dieser Bewegung um seine Mittellängsachse um einen Winkel von ca. 90° drehbaren, aus einem Schaft (11) und einem pilzförmigen Spannkopf (10) bestehenden Spannbolzen (3) aufweist, dass der Schaft (11) des Spannbolzens (3) mit mindestens einem radial abragenden Führungsbolzen (8, 9) versehen ist, der in jeweils eine Steuerkurve (12, 13) einer ortsfesten Steuerhülse (6) eingreift, und dass die Bauteile der Verriegelungsvorrichtung (1) in einem kastenartigen Gehäuse (2) installiert sind, **dadurch gekennzeichnet, dass** das Gehäuse (2) an der dem Spannkopf (10) des Spannbolzens (3) zugewandten Seite offen ist, dass in dem Gehäuse (2) ein Druckelement (4) in Längsrichtung des Spannbolzens (3) verschiebbar derart geführt ist, dass durch den aufsetzbaren Container der Spannbolzen (3) in die Verriegelungsstellung verdrehbar ist und dass das Druckelement als U-förmiger Profilabschnitt ausgebildet ist, dessen parallele Schenkel an den Innenflächen Van zwei parallelen Wandungen des Gehäuses anliegen und dass an der oberen Seite des Druckelementes (4) Druckklötze (16, 17) angesetzt oder angeformt sind.

2. Verriegelungsvorrichtung nach Anspruch 1, **dadurch gekennzeichnet, dass** der Schaft (11) des Spannbolzens (3) innerhalb eines ringförmigen Lagerflansches (5) angeordnet und mit diesem fest verbunden ist.

3. Verriegelungsvorrichtung nach Anspruch 1 oder 2, **dadurch gekennzeichnet, dass** der Abstand des Lagerflansches (5) zur zugewandten Fläche des Spannkopfes (10) des Spannbolzens (3), bezogen auf den verriegelten Zustand des Spannbolzens (3), kleiner ist als der Abstand zur gegenüberliegenden unteren Fläche des Schaftes (11) des Spannbolzens (3).

4. Verriegelungsvorrichtung nach einem oder mehreren der vorstehenden Ansprüche, **dadurch gekennzeichnet, dass** jede Steuerkurve (12, 13) im Bereich zwischen dem Lagerflansch und dem dem Spannbolzen (3) gegenüberliegenden Endbereich der Steuerhülse (6) vorgesehen ist.

5. Verriegelungsvorrichtung nach einem oder mehreren der vorstehenden Ansprüche, **dadurch gekennzeichnet, dass** jede Steuerkurve (12, 13) als spiralförmig verlaufende Nut vorgesehen ist, in die die Führungsbolzen (8, 9) eingreifen.

6. Verriegelungsvorrichtung nach einem oder mehreren der vorstehenden Ansprüche, **dadurch gekennzeichnet, dass** die Steuerhülse (6) mit zwei einander diametral gegenüberliegenden Steuerkurven (12, 13) versehen ist, in die jeweils ein Führungsbolzen (8, 9) eingreift.

7. Verriegelungsvorrichtung nach einem oder mehreren der vorstehenden Ansprüche, **dadurch gekennzeichnet, dass** jeder Führungsbolzen (8, 9) als Zylinderkopfschraube ausgebildet ist, dessen Gewindeschaft in den Schaft des Spannbolzens (3) eingedreht ist.

8. Verriegelungsvorrichtung nach einem oder mehreren der vorstehenden Ansprüche, **dadurch gekennzeichnet, dass** im unteren Bereich der Steuerhülse (6) ein Rastbolzen (7) angesetzt ist, der mit einem gegenüber der zugeordneten Wandung des Gehäuses (2) nach außen vorstehenden Kopf versehen ist.

## Claims

1. Locking arrangement (1) for fixing a container to the vehicle frame of a commercial vehicle, said locking arrangement (1) having a clamping pin (3) which is displaceable in the vertical direction and is rotatable through an angle of about 90° about its longitudinal centre axis during this movement and consists of a shank (11) and a mushroom-shaped clamping head (10), wherein the shank (11) of the clamping pin (3) is provided with at least one radially projecting guide pin (8, 9) which engages in in each case one control curve (12, 13) of a stationary control sleeve (6), and wherein the components of the locking arrangement (1) are installed in a box-like housing (2), **characterized in that** the housing (2) is open on the side facing the clamping head (10) of the clamping pin (3), **in that** (2) a pressure element (4) is guided in the housing in a displaceable manner in the longitudinal direction of the clamping pin (3) such that the clamping pin (3) is rotatable into the locking position by the attachable container, and **in that** the pressure element is in the form of a U-shaped profile section, the parallel arms of which rest against internal surfaces of two parallel walls of the housing, and **in that** pressure blocks (16, 17) are positioned or integrally formed on the top side of the pressure element (4).

2. Locking arrangement according to Claim 1, **characterized in that** the shank (11) of the clamping pin (3) is arranged within an annular bearing flange (5) and is firmly connected to the latter.

3. Locking arrangement according to Claim 1 or 2, **characterized in that** the distance of the bearing flange (5) from the facing surface of the clamping head (10) of the clamping pin (3), with regard to the locked state of the clamping pin (3), is smaller than the distance from the opposite lower surface of the shank (11) of the clamping pin (3).

4. Locking arrangement according to one or more of the preceding claims, **characterized in that** each control curve (12, 13) is provided in the region between the bearing flange and that end region of the control sleeve (6) which is opposite the clamping pin (3).

5. Locking arrangement according to one or more of the preceding claims, **characterized in that** each control curve (12, 13) is provided as a spirally extending groove in which the guide pins (8, 9) engage.

6. Locking arrangement according to one or more of the preceding claims, **characterized in that** the control sleeve (6) is provided with two diametrically opposing control curves (12, 13) in which in each case one guide pin (8, 9) engages.

7. Locking arrangement according to one or more of the preceding claims, **characterized in that** each guide pin (8, 9) is in the form of a cylinder head screw, the threaded shank of which is screwed into the shank of the clamping pin (3).

8. Locking arrangement according to one or more of the preceding claims, **characterized in that** a latching pin (7) is positioned in the lower region of the control sleeve (6) and is provided with a head which protrudes outwardly with respect to the associated wall of the housing (2).

## Revendications

1. Dispositif de verrouillage (1) pour permettre la fixation d'un conteneur sur le châssis d'un véhicule utilitaire qui comporte un boulon de serrage (3) constitué par une tige (11) et une tête de serrage (10) en forme de champignon, mobile en translation en direction verticale et mobile en rotation pendant ce déplacement, autour de son axe longitudinal médian, d'un angle d'environ 90°, la tige (11) de ce boulon de serrage (3) étant équipée d'au moins un boulon de guidage (8, 9) faisant saillie radialement qui vient en prise dans une came de commande respective (12, 13) d'un manchon de commande fixe (6), et les éléments du dispositif de verrouillage (1) étant montés dans un boitier (2) en forme de caisson,
**caractérisé en ce que**
le boitier (2) est ouvert sur sa face tournée vers la tête de serrage (10) du boulon de serrage (3), dans le boitier (2) est logé un élément de pression (4) mobile en coulissement dans la direction longitudinale du boulon de serrage (3) de sorte que le boulon de serrage (3) puisse être déplacé en rotation dans la position de verrouillage par le conteneur démontable,
l'élément de pression est réalisé sous la forme d'un segment profilé en forme de U dont les branches parallèles s'appliquent contre les faces internes de deux parois parallèles du boitier, et, sur la face supérieure de l'élément de pression (4) sont montés ou formés des blocs de pression (16, 17).

2. Dispositif de verrouillage conforme à la revendication 1,
**caractérisé en ce que**
la tige (11) du boulon de serrage (3) est montée à la partie interne d'une bride de palier (5) annulaire et reliée rigidement à celle-ci.

3. Dispositif de verrouillage conforme à la revendication 1 ou 2, **caractérisé en ce que**
la distance entre la bride de palier (5) et la face tournée vers celle-ci de la tête de serrage (10) du boulon de serrage (3) dans l'état verrouillé de ce boulon de serrage (3) est inférieure à sa distance de la face inférieure située à l'opposé de la tige (11) du boulon de serrage (3).

4. Dispositif de verrouillage conforme à une ou plusieurs des revendications précédentes,
**caractérisé en ce que**
chacune des cames de commande (12, 13) est prévue dans la zone située entre la bride de palier et la zone d'extrémité du manchon de commande (6) située à l'opposé du boulon de serrage (3).

5. Dispositif de verrouillage conforme à une ou plusieurs des revendications précédentes,
**caractérisé en ce que**
chacune des cames de commande (12, 13) est réalisée sous la forme d'une rainure s'étendant en forme de spirale dans laquelle viennent en prise les boulons de guidage (8, 9).

6. Dispositif de verrouillage conforme à une ou plusieurs des revendications précédentes,
**caractérisé en ce que**
le manchon de commande (6) est équipé de deux cames de commande (12, 13) diamétralement opposées dans lesquelles vient respectivement en prise un boulon de guidage (8, 9).

7. Dispositif de verrouillage conforme à une ou plusieurs des revendications précédentes,
**caractérisé en ce que**
chacun des boulons de guidage (8, 9) est réalisé sous la forme d'une vis à tête cylindrique dont l'arbre fileté tourne dans la tige du boulon de serrage (3).

8. Dispositif de verrouillage conforme à une ou plusieurs des revendications précédentes,
**caractérisé en ce que**
dans la zone inférieure du manchon de commande (6) est monté un boulon d'encliquetage (7) qui est équipé d'une tête faisant saillie vers l'extérieur par rapport à la paroi associée du boitier (2).
